# EUROPÄISCHE PATENTSCHRIFT

(11) **EP 2 930 270 B1**
(45) Veröffentlichungstag und Bekanntmachung des Hinweises auf die Patenterteilung: **05.06.2019**
(21) Anmeldenummer: 14164376.7
(22) Anmeldetag: 11.04.2014
(51) Int. Cl.: E01C 19/48, F16F 9/52, F16F 9/02

(54) **Dämpfervorrichtung**
Damper device
Dispositif d'amortisseur

(43) Veröffentlichungstag der Anmeldung: 14.10.2015
(73) Patentinhaber: Joseph Vögele AG, 67075 Ludwigshafen (DE)
(72) Erfinder: Petersmann, Eckhard, 58135 Hagen (DE)
(74) Vertreter: Grünecker Patent- und Rechtsanwälte PartG mbB

(56) Entgegenhaltungen:
- EP-A2- 1 734 276
- GB-A- 2 308 421
- US-A1- 2013 322 965

## Beschreibung

Die Erfindung bezieht sich auf eine Dämpfervorrichtung gemäß dem Oberbegriff des Anspruchs 1.

Aus der Praxis und beispielsweise aus der EP 0 667 415 A1 ist bekannt, dass bestimmte selbstfahrende Baumaschinen, beispielsweise Straßenfertiger oder Beschicker, während des Arbeitseinsatzes mit Material versorgt werden müssen. Dieser als Beschickung bezeichnete Vorgang wird während des Fahrbetriebs durchgeführt, indem beispielsweise ein Lastkraftwagen rückwärts an dem gleichzeitig vorwärts fahrenden Straßenfertiger oder Beschicker heranfährt und das Material von seiner Ladefläche in den Materialbunker des Straßenfertigers oder Beschickers kippt. Während der Beschickung selbst wird der Lastkraftwagen dabei von dem Straßenfertiger oder Beschicker angeschoben.

Es ist ferner bekannt, dass der Lastkraftwagen zur Beschickung an einem Abdruckbalken des Straßenfertigers oder Beschickers andockt, um seine Ladefläche derart über dem Materialbunker zu positionieren, dass beim Abkippen kein Material daneben fällt. Damit der Straßenfertiger bzw. Beschicker während des Andockens des Lastkraftwagens, bzw. beim Anschieben des Lastkraftwagens, nicht ruckartig auf dem Untergrund rückwärts versetzt wird, ist der Abdruckbalken herkömmlicherweise federnd bzw. dämpfend gelagert.

Beispielsweise offenbart die DE 10 2011 120 161 A1 einen Straßenfertiger mit einer Andockbaugruppe, die vorne in Fahrtrichtung gesehen unterhalb des Materialbunkers angeordnet ist. Die Andockbaugruppe umfasst einen Abdruckbalken, welcher mittels elastomeren Strukturdämpfern federnd gelagert ist. Nachteilig daran ist, dass die elastomeren Strukturdämpfer mit der Zeit verhärten und brüchig werden, wodurch sich insbesondere die Dämpfcharakteristik der Andruckbaugruppe unerwünscht ändert.

US 5,004,394 A und EP 2 295 641 A2 offenbaren jeweils einen Straßenfertiger mit einer Andockbaugruppe, wobei der Abdruckbalken der Andockbaugruppe von zwei ansteuerbaren Hydraulikzylindern getragen wird. Dabei sind die jeweiligen Hydraulikzylinder auf gegenüberliegenden Seiten des Kolbens an ein im Straßenfertiger vorgesehenes Hydrauliksystem angeschlossen. Die jeweiligen Kolben der Hydraulikzylinder können somit zwischen einer eingefahrenen und einer ausgefahrenen Position verstellt werden, indem von außen in die Hydraulikzylinder ein hydraulisches Fluid eingeleitet wird. Nachteilig daran ist, dass der Anschluss der jeweiligen Hydraulikzylinder an das Hydrauliksystem des Straßenfertigers kostspielig ist und die Hydraulikleitungen, welche an die Hydraulikzylinder angeschlossen sind, viel Platz auf dem Straßenfertiger in Anspruch nehmen. Ferner werden zur Ansteuerung des Hydrauliksystems, um die jeweiligen Hydraulikzylinder in eine gewünschte Position zu setzen, zusätzliche Elektronikbauteile auf dem Straßenfertiger benötigt, wodurch die Herstellungskosten in die Höhe gehen.

DE 2 243 076 A offenbart einen Stoßfänger für Kraftfahrzeuge. Der Stoßfänger weist einen ersten und zweiten Dämpfer auf, welche untereinander kreuzweise mittels hydraulischer Leitungen verbunden sind, sodass aus dem ersten Dämpfer von einer Kolbenstangenseite hydraulisches Fluid in die Kolbenseite des zweiten Dämpfers sowie von der Kolbenseite des ersten Dämpfers hydraulisches Fluid in die Kolbenstangenseite des zweiten Dämpfers verdrängbar ist. Die jeweiligen Dämpfer umfassen ferner einen Trennkolben, der im Dämpfer einen Gasraum abgrenzt, der zum Ausgleich einer Volumenänderung dient. Die jeweiligen Dämpfer sind weiterhin mit einem Regenerierungssystem verbunden, welches den Dämpfern von außen ein hydraulisches Fluid zuführt, um die Dämpfer nach einem Aufprall in eine Ausgangslage zurückzuversetzen. Nachteilig daran ist, dass durch das Verbinden der Dämpfer untereinander sowie den Anschluss der jeweiligen Dämpfer an das hydraulische Regenerierungssystem viel Platz im Kraftfahrzeug beansprucht wird und weiterhin ein hoher Wartungs- und Servicebedarf besteht.

EP 1 734 276 A2 offenbart eine Gasfeder mit einem Rückstellraum, in welchem eine Druckfeder angeordnet ist. Die Druckfeder kann als Tellerfederpacket ausgebildet sein. Der Rückstellraum ist durch einen topfförmigen Ausgleichskolben von einem Innenraum eines Arbeitszylinders getrennt.

GB 2 308 421 A offenbart eine Gasdruckfeder mit einem Arbeitskolben, der einen geschlossenen Zylinder in eine erste Kammer und in eine zweite Kammer unterteilt und zwischen diesen verschiebbar angeordnet ist. Am Boden der Gasdruckfeder ist eine Kompensationskammer vorgesehen, die von einer Arbeitskammer der Gasdruckfeder durch einen verschiebbar gelagerten Kolben getrennt ist.

US 2013/0322965 A1 offenbart einen Straßenfertiger mit einer Andockvorrichtung. Die Andockvorrichtung umfasst ein Verstellglied mit einem hydraulischen Zylinder, der durch eine Steuerung aktiviert werden kann, um einen Andruckbalken relativ zu einer Chassishalterung zu versetzen, damit ein durch die Andockvorrichtung angeschobenes Materiallieferfahrzeug in einer gewünschten Position relativ zum Straßenfertiger ausgerichtet wird.

EP 2 527 534 A1 offenbart einen Straßenfertiger mit einem Abdruckbalken, welcher von einem Dämpfer getragen wird. Der Dämpfer verfügt über eine Reibungsfeder, welche beim Einfedern eine andere Dämpfrate als beim Ausfedern aufweist.

Der Erfindung liegt daher die Aufgabe zugrunde, einen Straßenfertiger oder einen Beschicker zur Verfügung zu stellen, der durch den Einsatz einfacher, konstruktiver technischer Mittel ein schweres Materialversorgungsfahrzeug während des Einbaus vor sich her schieben kann, ohne dass dadurch unerwünschte Beschleunigungen auf den Straßenfertiger wirken, wodurch die Qualität des Einbauergebnisses gemindert werden könnte.

Diese Aufgabe wird gelöst durch einen Straßenfertiger oder einen Beschicker den technischen Merkmalen des Anspruchs 1. Verbesserte Weiterbildungen der Erfindung sind Gegenstand der Unteransprüche.

Erfindungsgemäß hat die geschlossene Kammer ein veränderbares Volumen, um temperaturbedingte Druckschwankungen innerhalb der geschlossenen Kammer zu kompensieren D.h., dass die geschlossene Kammer dazu ausgebildet ist, sich einer temperaturbedingten Volumenzunahme bzw. Volumenabnahme der darin eingeschlossenen kompressiblen Flüssigkeit anzupassen, sodass auf diese Weise nahezu eine konstante Kraftkennlinie (Dämpfcharakteristik) unabhängig von der Temperatur der eingeschlossenen Flüssigkeit für die Dämpfervorrichtung erreicht werden kann. Darüber hinaus bietet die erfindungsgemäße Dämpfervorrichtung den Vorteil, dass sie kompakt herstellbar ist und somit ideal zum Einsatz an Fahrzeugen, insbesondere an selbstfahrenden Baumaschinen, beispielsweise an einem Straßenfertiger oder einem Beschicker, einsetzbar ist. Dies liegt vor allem daran, weil die erfindungsgemäße Dämpfervorrichtung ein in sich geschlossenes Dämpfsystem darstellt, welches nicht zusätzlich an einem Hydrauliksystem angeschlossen werden muss. Bei der Erfindung bleibt daher die kompressible Flüssigkeit stets in der geschlossenen Kammer; d.h., dass die geschlossene Kammer nicht in Verbindung mit einem externen Hydrauliksystem steht. Während bei bekannten Hydrauliksystemen, die Dämpfwirkung durch das an die Hydraulikzylinder angeschlossene Hydrauliksystem beispielsweise durch Drosselelemente, erzielbar ist, ermöglicht die erfindungsgemäße Dämpfervorrichtung die Dämpfwirkung selbst. Daher lässt sich die erfindungsgemäße Dämpfervorrichtung insbesondere kostengünstig an einem Straßenfertiger bzw. an einem Beschicker nachrüsten bzw. von diesem für Wartungs- und Servicezwecke entfernen.

Erfindungsgemäß verfügt die Bodeneinheit über eine Schottwand, die innerhalb des Zylinders verschiebbar angeordnet ist. Bei dieser Ausführungsform hängt damit das veränderbare Volumen der geschlossenen Kammer direkt mit der Lage der Schottwand innerhalb des Zylinders zusammen. Die Schottwand bietet ein einfaches Mittel, um eine Druckänderung der in der Kammer eingeschlossenen kompressiblen Flüssigkeit, sei es durch das Einfahren der Kolbenstange und/oder durch eine temperaturbedingte Volumenänderung der Flüssigkeit, zu kompensieren, indem sie in den Zylinder weiter eingedrückt wird, um das Volumen der geschlossenen Kammer zu vergrößern, oder sich in Richtung des Kolbenlagers verschiebt, um das Volumen der geschlossenen Kammer zu verkleinern.

Erfindungsgemäß umfasst die Bodeneinheit einen Deckel und ein Federelement, wobei das Federelement zwischen dem Deckel und der Schottwand angeordnet ist. Dadurch ergibt sich eine besonders kompakte Bauweise für die Bodeneinheit, wobei das Federelement die Schottwand gegen den Druck der eingeschlossenen kompressiblen Flüssigkeit schwimmend in einer gewünschten Position innerhalb des Zylinders halten kann.

Besonders vorteilhaft ist es, wenn die Schottwand einen Endabschnitt und einen Führungsabschnitt umfasst, wobei der Führungsabschnitt über einen größeren Außendurchmesser als der Endabschnitt verfügt. Dies ermöglicht es, dass der Endabschnitt auf besonders stabile Art und Weise auf dem Federelement der Bodeneinheit sitzt. Idealerweise umgibt das Federelement zumindest teilweise den Endabschnitt der Schottwand, um die Schottwand innerhalb des Zylinders stabil zu lagern.

Zweckmäßig ist es auch, wenn die Schottwand zwischen dem Endabschnitt und dem Führungsabschnitt einen Sitz vorsieht, gegen welchen das Federelement anliegt. Damit wird gewährleistet, dass die Schottwand stabil durch das Federelement in linearer Richtung innerhalb des Zylinders geführt werden kann.

Beim Einsatz, insbesondere an einem Straßenfertiger oder Beschicker, bei denen große Kräfte auf die Dämpfervorrichtung wirken können, ist es sinnvoll, wenn das Federelement mindestens eine Tellerfeder umfasst. Obwohl die Tellerfeder sehr große Kräfte aufnehmen kann, benötigt sie lediglich einen kleinen Einbauraum. Zur Verlängerung der Federstrecke ist es möglich, dass das Federelement eine Vielzahl von Tellerfedern umfasst, um eine Federsäule zu bilden. Die Federsäule kann einzelne gegensinnig zueinander angeordnete Tellerfedern und/oder mehrere gegensinnig zueinander angeordnete Federpakete, jeweils umfassend mehrere übereinander gleichsinnig angeordnete Tellerfedern, aufweisen, um eine größere Federstrecke zur Verfügung zu stellen, bzw. um eine gewünschte Federrate vorzusehen.

In einer weiteren Ausführungsform der Erfindung ist die Schottwand relativ zum Zylinder drehfest gelagert. D.h., dass die Schottwand innerhalb des Zylinders linear verschiebbar ist, sich jedoch nicht relativ zum Zylinder verdrehen kann. Dies kann beispielsweise durch eine Führung ermöglicht werden, entlang welcher die Schottwand linear innerhalb des Zylinders verschiebbar ist. Als solche Führung könnte beispielsweise zwischen dem Zylinder und der Schottwand eine Nutfederverbindung vorgesehen sein.

Vorteilhaft ist es auch, wenn die Schottwand konkav zum Inneren der Kammer hin, d.h. als Hohlkörper ausgebildet ist, der einen Teil des Kammervolumens der Dämpfervorrichtung bildet. Es ist somit möglich, ein möglichst großes Dämpfvolumen für die geschlossene Kammer zu schaffen, ohne dabei die Dämpfervorrichtung zu vergrößern. Die im Hohlkörper aufgenommene kompressible Flüssigkeit sorgt weiterhin in vorteilhafter Weise dafür, dass die als Hohlkörper ausgebildete Schottwand gleichmäßig innerhalb des Zylinders verschiebbar ist, selbst wenn große Kräfte auf die Kolbenstange wirken. Ebenfalls begünstigt die Hohlkörperform der Schottwand das Abdichten der geschlossenen Kammer relativ zur Bodeneinheit, weil die kompressible Flüssigkeit gegen die Innenfläche des Hohlkörpers nach außen gegen den Zylinder drückt.

Vorzugsweise ist zwischen dem Kolbenlager und der Bodeneinheit auf der Kolbenstange eine Kolbenplatte innerhalb des Zylinders befestigt. Die Kolbenplatte bildet zwischen den beiden Kammerhälften eine verschiebbare Trennwand und verfügt vorzugsweise über mindestens eine Drosselbohrung, um eine Verlagerung der kompressiblen Flüssigkeit zwischen den beiden Kammerhälften zu gewährleisten, wenn sich die Kolbenstange relativ zum Zylinder verschiebt.

Das Einfahr- bzw. Rückstellverhalten der Kolbenstange lässt sich insbesondere dadurch genau einstellen, indem in mindestens einer der Drosselbohrungen ein Ventilelement angeordnet ist. Insbesondere handelt es sich dabei um ein Kugelrückschlagventil, welches sich öffnet und dadurch ein Durchströmen der kompressiblen Flüssigkeit gewährleistet, wenn die Kolbenstange in den Zylinder einfährt, bzw. welches sich schließt, wenn sich die Kolbenstange aus einer eingefahrenen Position selbsttätig in die Ausgangslage zurückversetzt. Dadurch lässt sich hervorragend die Dämpfeigenschaft der Dämpfervorrichtung auf gewünschte Art und Weise regeln.

Es hat sich herausgestellt, dass die Dämpfervorrichtung insbesondere dann zum Dämpfen großer Kräfte sowie zum Einsatz bei relativ großen Temperaturschwankungen einsetzbar ist, wenn die kompressible Flüssigkeit ein Silikon ist. Ein Silikon bietet nämlich hervorragende elastische Kompressionseigenschaften und lässt sich gut zwischen den beiden Kammern verlagern, wenn auf die Kolbenstange eine Einschubkraft wirkt, bzw. von dieser weggenommen wird. Außerdem bedingt das Silikon, dass die Kolbenstange selbsttätig in seine Ausgangslage zurückfährt, sobald die auf die Kolbenstange einwirkende Kraft unter eine vorbestimmte Kraftschwelle fällt.

Um ein selbsttätiges Rückstellen der Kolbenstange in eine Ausgangslage zu beschleunigen, ist die in der Kammer eingeschlossene kompressible Flüssigkeit mit einem vorbestimmten Druck beaufschlagt. Dadurch kann die Kolbenstange gegen das Kolbenlager in einer gewünschten Ausgangslage vorgespannt werden. Beispielsweise kann somit ein Abdruckbalken eines Straßenfertigers oder Beschickers, welcher durch die Kolbenstange getragen wird, selbsttätig, d.h. ohne zusätzlichen hydraulischen Steueraufwand, in seine Ausgangslage zurückgesetzt werden, wenn von ihm eine Andruckkraft weggenommen wird, d.h., wenn der Lastkraftwagen nach der Beschickung wegfährt.

In einer weiteren vorteilhaften Ausführungsvariante der Erfindung umfasst der Zylinder und/oder die Bodeneinheit eine Lüftungsöffnung, durch welche Luft aus der/in die Bodeneinheit verdrängbar bzw. einströmbar ist, wenn sich die Schottwand verschiebt. Dies bedingt, dass keine Luft in der Bodeneinheit eingeschlossen wird und ein Luftpolster bildet, welches die Dämpfcharakteristik beeinflusst.

Die erfindungsgemäße Dämpfervorrichtung lässt sich hervorragend bei einem Straßenfertiger oder Beschicker verwenden. Es handelt sich dabei insbesondere um einen Straßenfertiger oder Beschicker, der einen Materialbunker und mindestens eine Dämpfervorrichtung gemäß der Erfindung umfasst, die am Chassis des Straßenfertigers oder Beschickers befestigt ist und einen Abdruckbalken trägt, gegen welchen ein Materiallieferfahrzeug zur Befüllung des Materialbunkers andocken kann.

Im Folgenden wird ein vorteilhaftes Ausführungsbeispiel der Erfindung anhand einer Zeichnung näher dargstellt. Im Einzelnen zeigen:
- Figur 1:: eine Dämpfervorrichtung gemäß der Erfindung im entspannten Zustand,
- Figur 2:: eine erfindungsgemäße Dämpfervorrichtung mit einer Einschubdruckkraft auf die Kolbenstange,
- Figur 3:: eine erfindungsgemäße Dämpfervorrichtung mit einer maximal belasteten, eingeschobenen Kolbenstange,
- Figur 4:: eine erfindungsgemäße Dämpfervorrichtung mit einer Einschubkolbenkraft auf die Kolbenstange sowie einem Kammervolumenausgleich mittels der schwimmenden Schottwand bei einem Temperaturabfall,
- Figur 5:: eine erfindungsgemäße Dämpfervorrichtung mit einer Einschubkolbenkraft auf die Kolbenstange sowie einem Kammervolumenausgleich bei einem Temperaturanstieg,
- Figur 6:: eine erfindungsgemäße Dämpfervorrichtung mit einer Schottwand, die als Hohlkörper ausgebildet ist,
- Figur 7:: eine Andockbaugruppe für einen Straßenfertiger oder Beschicker,
- Figur 8:: einen Straßenfertiger mit einer Andockbaugruppe gemäß Figur 7,
- Figur 9:: einen Beschicker mit einer Andockbaugruppe gemäß Figur 7, und
- Figur 10:: ein Kraft-Weg-Diagramm gemäß der erfindungsgemäßen Dämpfervorrichtung.

Gleiche Komponenten sind in den Figuren durchgängig mit gleichen Bezugszeichen versehen.

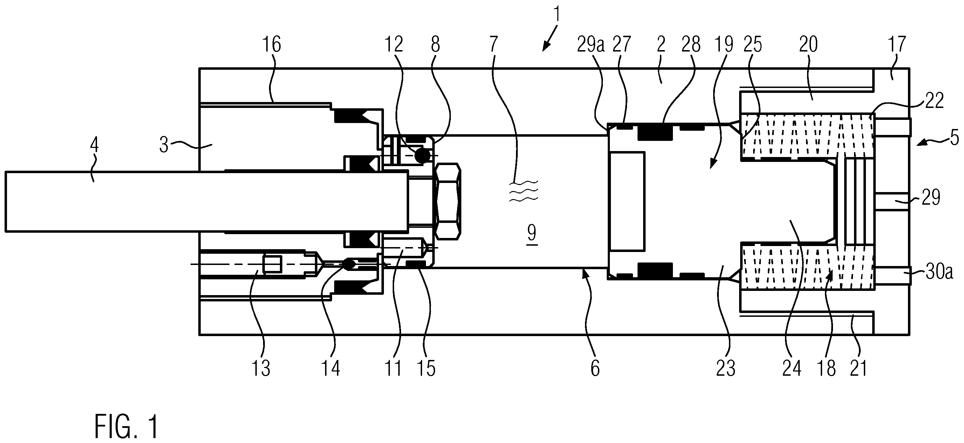

Figur 1 zeigt eine erfindungsgemäße Dämpfervorrichtung 1 als Schnittdarstellung. Die Dämpfervorrichtung 1 verfügt über einen Zylinder 2, an dessen einem Ende ein Kolbenlager 3 mit einer darin verschiebbar angeordneten Kolbenstange 4 befestigt ist. Auf der anderen Seite des Zylinders 2 ist eine Bodeneinheit 5 befestigt. Der Zylinder 2 bildet zusammen mit dem Kolbenlager 3 und der Bodeneinheit 5 eine geschlossene Kammer 6, in welcher eine kompressible Flüssigkeit 7 eingeschlossen ist.

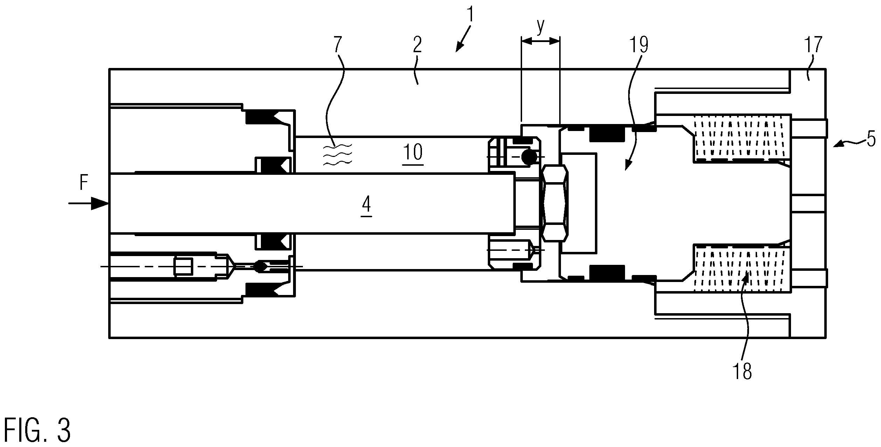

An einem in die geschlossene Kammer 6 hineinragenden Ende der Kolbenstange 4 ist eine Kolbenplatte 8 befestigt. Die Kolbenstange 4, insbesondere die darin befestigte Kolbenplatte 8, unterteilt die geschlossene Kammer 6 in eine erste Kammerhälfte 9 und eine zweite Kammerhälfte 10 (siehe Figur 3). Die erste Kammerhälfte 9 befindet sich auf einer zum Kolbenlager 3 abgewandten Seite der Kolbenplatte 8. Wie gut in der Figur 3 zu erkennen ist, befindet sich die zweite Kammerhälfte 10 der geschlossenen Kammer 6 auf einer zum Kolbenlager 3 hinzugewandten Seite der Kolbenplatte 8. Gemäß der Figur 1 ist die Kolbenstange 4 in einer Ausgangslage, in welcher sie an dem Kolbenlager 3 anliegt. In der Ausgangslage befindet sich nahezu die gesamte kompressible Flüssigkeit 7 in der ersten Kammerhälfte 9.

Die Kolbenplatte 8 verfügt über zwei Drosselbohrungen 11, wobei in einer der Drosselbohrungen 11 ein Rückschlagventil 12 angeordnet ist. Dadurch wird erreicht, dass beim Einschieben der Kolbenstange 4 in den Zylinder 2 die kompressible Flüssigkeit 7 durch beide Drosselbohrungen 11 von der ersten Kammerhälfte 9 in die zweite Kammerhälfte 10 strömt. Dabei nimmt der Druck innerhalb der geschlossenen Kammer 6 zu. Sobald eine an der Kolbenstange 4 anliegende Einschubkraft F, welche auf die eingeschobene Kolbenstange 4 wirkt, weggenommen wird, wird die Kolbenstange 4 selbsttätig in die gemäß der Figur 1 gezeigte Ausgangslage zurückversetzt. Dabei fällt der Druck innerhalb der geschlossenen Kammer 6 wieder auf das ursprüngliche Druckpotential in der Ausgangslage. Während der Rückstellbewegung der Kolbenstange 4 kann die kompressible Flüssigkeit 7 von der zweiten Kammerhälfte 10 in die erste Kammerhälfte 9 lediglich durch die Drosselbohrung 11 zurückströmen, in welcher kein Rückschlagventil 12 angeordnet ist. Die andere Drosselbohrung 11 bleibt dabei durch das Rückschlagventil 12 geschlossen. Dies führt zu einer verlangsamten, gedämpften Rückkehr der Kolbenstange 4 in ihre Ausgangslage, in welcher die Kolbenplatte 8 der Kolbenstange 4 am Kolbenlager 3 anliegt.

Zum Befüllen der geschlossenen Kammer 6 mit der kompressiblen Flüssigkeit 7 ist im Kolbenlager 3 eine Befüllöffnung 13 ausgebildet. In der Befüllöffnung 13 ist ein Ventilelement 14, insbesondere ein Einwegventil, zum Befüllen bzw. Einschließen der kompressiblen Flüssigkeit 7 in der geschlossenen Kammer 6 vorgesehen. Ferner kann man in der Figur 1 gut erkennen, dass umfangsseitig an der Kolbenplatte 8 eine Kolbenplattendichtung 15 befestigt ist. Die Kolbenplattendichtung 15 bedingt, dass die kompressible Flüssigkeit 7 zwischen den beiden Kammerhälften 9, 10 lediglich durch die Drosselbohrungen 11 hin und her strömt, wenn die Kolbenstange 4 innerhalb des Zylinders 2 verschoben wird. Ferner verfügt die erfindungsgemäße Dämpfervorrichtung gemäß Figur 1 eine Schrauben-Gewindeverbindung 16, mittels welcher das Kolbenlager 3 am Zylinder 2 befestigt ist. Alternativ dazu wäre es auch vorstellbar, dass das Kolbenlager 3 integral mit dem Zylinder 2 ausgebildet ist.

Die in der Figur 1 dargestellte Bodeneinheit 5 umfasst einen Deckel 17, ein Federelement 18 sowie eine Schottwand 19. Die Schottwand 19 ist schwimmend im Zylinder 2 angeordnet und bildet eine verschiebbare Kammergrenze der geschlossenen Kammer 6. Der Deckel 17 umfasst einen Führungsvorsprung 20, der mittels einer weiteren SchraubenGewinde-Verbindung 21 am Zylinder 2 befestigt ist. Alternativ zur Schrauben-GewindeVerbindung 21 könnte der Deckel 17 ebenso gut integral mit dem Zylinder 2 ausgebildet sein. Gemäß Figur 1 umfasst das Federelement 18 mehrere einzelne Tellerfedern 22. Wie gezeigt, können diese einzeln, bzw. als Federpakete, umfassend zwei, drei oder mehr übereinander gleichsinnig angeordnete Tellerfedern, zueinander gegensinnig angeordnet sein. Dadurch lässt sich die Dämpf- bzw. Federcharakteristik des Federelements 18 gut einstellen. Die Tellerfedern 22 eignen sich vor allem zum Abdämpfen großer Kräfte und besitzen eine temperaturabhängige Dämpfcharakteristik.

Die Schottwand 19 verfügt über einen Führungsabschnitt 23 und einen Endabschnitt 24. Zwischen dem Führungsabschnitt 23 und dem Endabschnitt 24 ist ein Sitz 25 ausgebildet, welcher gegen das Federelement 18 anliegt. Zur verbesserten Lagerung der Schottwand 19 auf dem Federelement 18 ist dieses um den Endabschnitt 24 herum angeordnet. Ferner kann man in der Figur 1 gut sehen, dass das Federelement 18 zwischen dem Endabschnitt 24 der Schottwand 19 und dem Führungsvorsprung 20 des Deckels 17 angeordnet ist, wodurch eine Führung für das Federelement 18 geschaffen wird, innerhalb welcher sich das Federelement 18 zielgerichtet komprimieren bzw. entspannen kann.

Die Schottwand 19 verfügt ferner über mindestens ein Dichtungselement 27, welches dafür sorgt, dass die kompressible Flüssigkeit 7 in der geschlossenen Kammer 6 bleibt. Für eine drehfeste Lagerung der Schottwand 19 innerhalb des Zylinders 2 ist ein Führungselement 28 zwischen dem Zylinder 2 und der Schottwand 19 vorgesehen. Das Führungselement 28 kann beispielsweise durch eine Feder-Nut-Verbindung ausgebildet sein.

Ferner ist im Deckel 17 gemäß Figur 1 eine Lüftungsöffnung 29 ausgebildet. Die Lüftungsöffnung 29 ermöglicht, dass Luft in den Raum, in dem sich das Federelement 18 befindet, hineinströmen bzw. aus diesem herausströmen kann, wenn die Schottwand 19 im Zylinder 2 hin und her bewegt wird. Schließlich zeigt Figur 1, dass im Deckel 17 mindestens eine Montageöffnung 30a ausgebildet ist, in welche ein nicht gezeigtes Werkzeug eingreifen kann, um den Deckel 17 auf den Zylinder 2 zu schrauben.

In der Figur 1 beträgt die Temperatur der kompressiblen Flüssigkeit 7 +20° C. Dabei ist das Federelement 18 vollständig entspannt. Im entspannten Zustand hält das Federelement 18 die Schottwand 19 in einer Endlage, in welcher die Schottwand 19 an einem optional vorgesehenen Vorsprung 29a des Zylinders 2 anliegt. Die Kolbenstange 4 liegt an dem Kolbenlager 3 an.

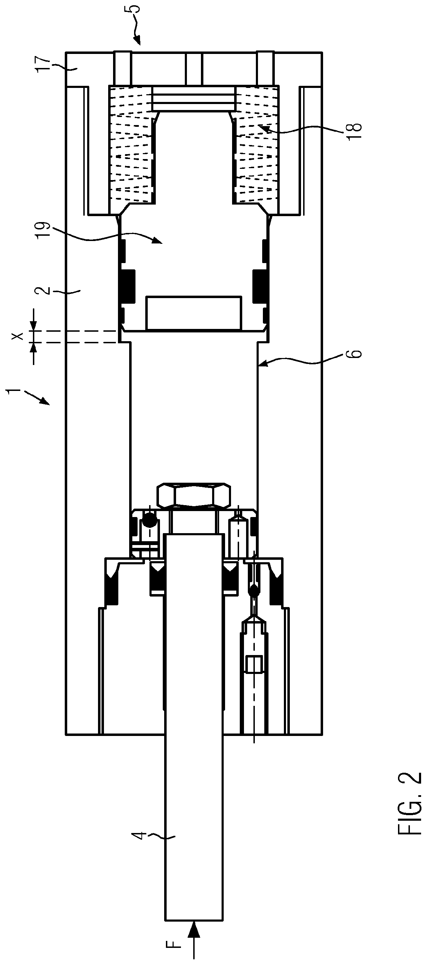

Gemäß Figur 2 ist die Schottwand 19 aus ihrer Endlage gemäß Figur 1 heraus in einer Nulllage positioniert. Relativ zur Endlage gemäß Figur 1 ist die Schottwand 19 um einen Federweg X nach rechts zum Deckel 17 der Bodeneinheit 5 hin versetzt. Die Nulllage wird erreicht, indem die in der Kammer 6 eingeschlossene kompressible Flüssigkeit 7 einen vorbestimmten Druck ausübt, der gleichzeitig dafür sorgt, dass die Kolbenstange 4 in der Ausgangslage am Kolbenlager 3 vorgespannt anliegt. Beispielsweise beträgt der Federweg X 6 mm, wenn das Federelement 18 mit 61,2 bar vorgespannt ist, was in etwa einer Kraft F auf die Kolbenstange 4 von 300 daN sowie 2700 daN auf die Schottwand 19 entspricht. Bei einer derartigen beispielhaften Beanspruchung der Dämpfervorrichtung 1 vergrößert sich das Volumen der Kammer 6 um ca. 26,56 cm³ auf ca. 564,56 cm³, wenn die Flüssigkeitstemperatur bei +20°C bleibt.

Die Figur 3 zeigt die Dämpfervorrichtung 1 in einem höchstbelasteten Zustand. Dabei ist die Kolbenstange 4 komplett, beispielsweise 80 mm, in den Zylinder 2 eingeschoben. Dies wird dadurch erreicht, dass auf die Kolbenstange 4 eine Kraft F von ca. 6500 daN wirkt. Die Schottwand 19 wird dabei durch einen maximalen Federweg Y gegen die Vorspannkraft des Federelements 18 zum Deckel 17 der Bodeneinheit 5 hin gedrückt. In dieser Lage wird das Federelement 18 zu ca. 80% belastet. Die Flüssigkeitstemperatur beträgt weiterhin +20°C.

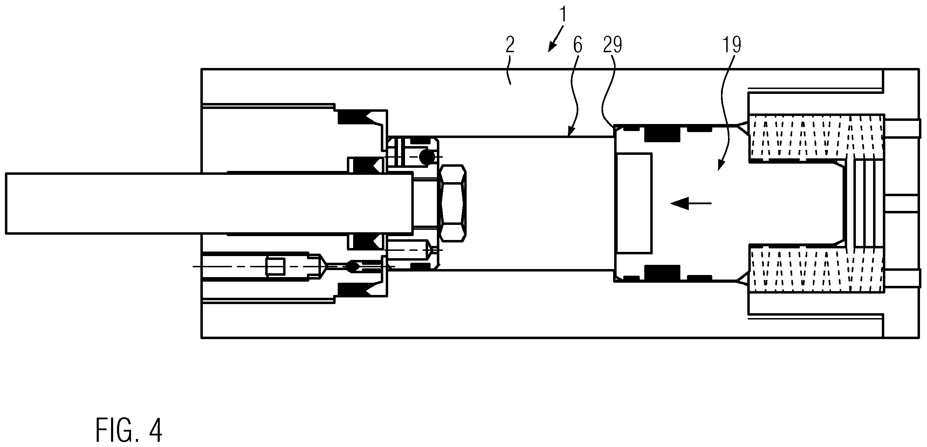

Relativ zu Figur 2, in welcher sich die Schottwand 19 in der Nulllage befindet, führt die Dämpfervorrichtung 1 in der Figur 4 einen temperaturbedingten Volumenausgleich durch. Dabei berücksichtigt die erfindungsgemäße Dämpfervorrichtung 1 einen Temperaturabfall um -30°C, sodass die Flüssigkeitstemperatur von ursprünglich +20°C gemäß der Figur 2 auf -10°C abkühlt. Durch diesen Temperaturabsturz kommt es zu einer Schrumpfung des Volumens der in der geschlossenen Kammer 6 eingeschlossenen kompressiblen Flüssigkeit 7. Die Schottwand 19 wird daher aus der in Figur 2 gezeigten Nulllage heraus durch die Vorspannkraft des Federelements 18 nach links in Richtung zur Kolbenstange 4 hin bewegt, um das Volumen der Kammer 6 der Schrumpfung der kompressiblen Flüssigkeit 7 anzupassen. Wie gut in der Figur 4 zu sehen ist, liegt die Schottwand 19 dann wieder am Vorsprung 29a des Zylinders an. Die gemäß der Figur 2 wirkende Vorspannkraft von 300 daN verringert sich durch den Volumenausgleich, d.h. durch das Entspannen des Federelements 18, auf ca. 125 daN.

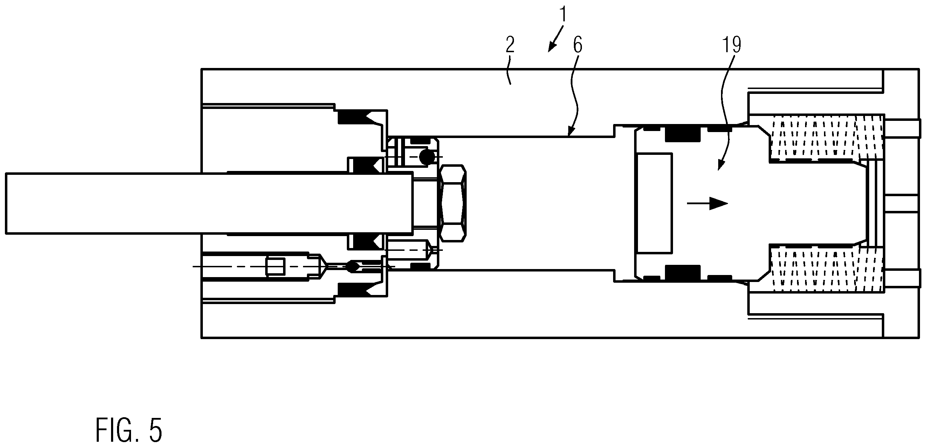

Die erfindungsgemäße Dämpfervorrichtung 1 gemäß der Figur 5 führt einen Volumenausgleich der geschlossenen Kammer 6 bei einem Temperaturanstieg durch. Dies geschieht wiederum relativ zur gezeigten Nulllage der Schottwand 19 gemäß der Figur 2. In der Figur 5 ist das Federelement 18 durch eine Kraft F von 300 daN vorgespannt. Bei einem Temperaturanstieg von +30°C erhöht sich die ursprünglich in Figur 2 angenommene Flüssigkeitstemperatur von +20°C auf +50°C, wodurch die Vorspannkraft F auf das Federelement 18 auf ca. 400 daN zunimmt. Das Federelement 18 ist dabei zu ca. 40% belastet. Durch den Temperaturanstieg um +30°C kommt es zur Ausdehnung der in der geschlossenen Kammer 6 eingeschlossenen kompressiblen Flüssigkeit 7 um ca. 16,24 cm³, was ca. einem Federweg von 3,67 mm nach rechts zum Deckel 17 hin aus der Nulllage gemäß Figur 2 heraus entspricht. Das Volumen der Kammer 6 passt sich somit der Ausdehnung der kompressiblen Flüssigkeit an.

Gemäß den Figuren 4 und 5 wurde gezeigt, dass die Schottwand 19 der erfindungsgemäßen Dämpfervorrichtung eine temperaturbedingte Schrumpfung bzw. Ausdehnung der kompressiblen Flüssigkeit 7 kompensieren kann, weil sie schwimmend innerhalb des Zylinders angeordnet ist. Dies kann bei der erfindungsgemäßen Dämpfervorrichtung 1 unabhängig von der Stellung der Kolbenstange 4 innerhalb des Zylinders 2 stattfinden.

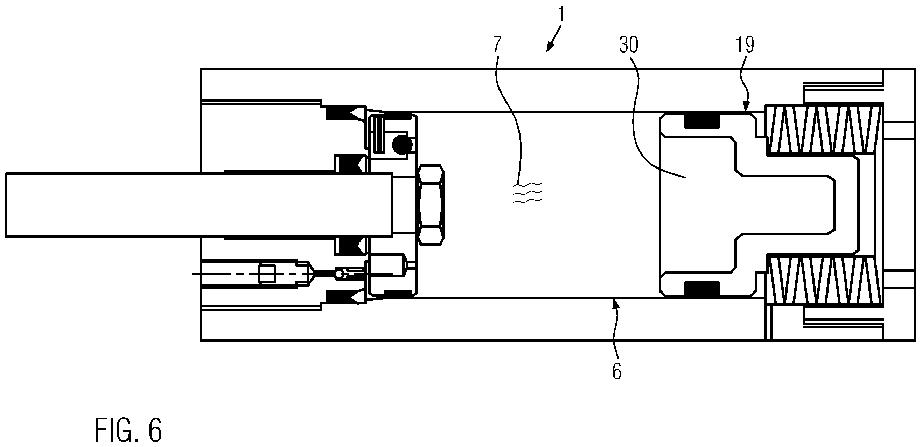

Bei der in Figur 6 gezeigten Dämpfervorrichtung 1 ist die Schottwand 19 als konkaver bzw. als Hohlkörper 30 ausgebildet. Der Hohlkörper 30 bildet somit einen Teil des Volumens der eingeschlossenen Kammer 6. Dadurch, dass sich der Druck gleichmäßig auf der Innenfläche des Hohlkörpers 30 ausbreitet, verbessert sich die Abdichtung zwischen dem Hohlkörper 30 und dem Zylinder 2. Durch das Vorsehen des Hohlkörpers 30 vergrößert sich auch das Volumen der Kammer 6. Dadurch kann eine größere Menge an kompressibler Flüssigkeit 7 in der geschlossenen Kammer 6 aufgenommen werden, was sich positiv auf das Schrumpf- bzw. Ausdehnverhalten der Flüssigkeit 7 auswirken kann.

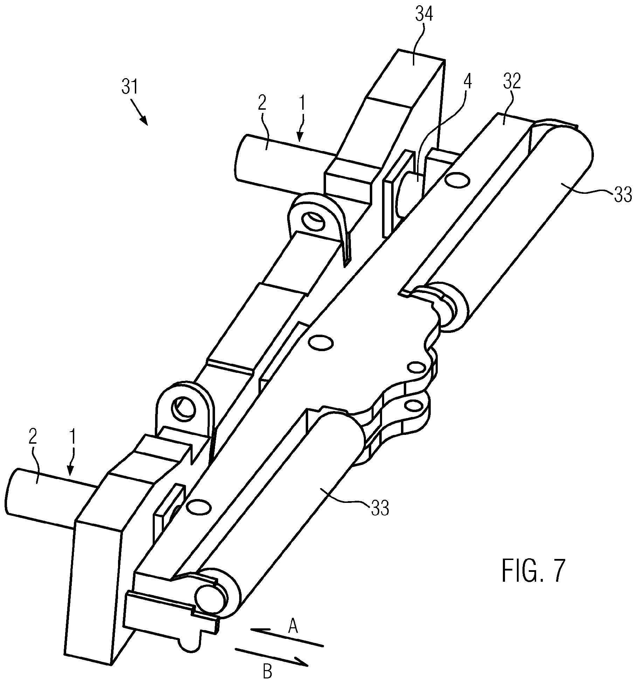

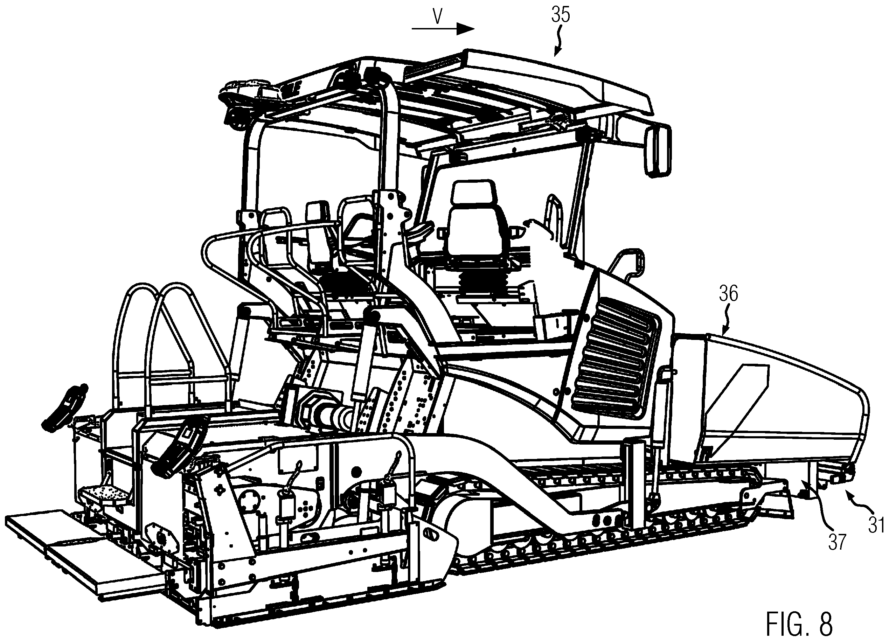

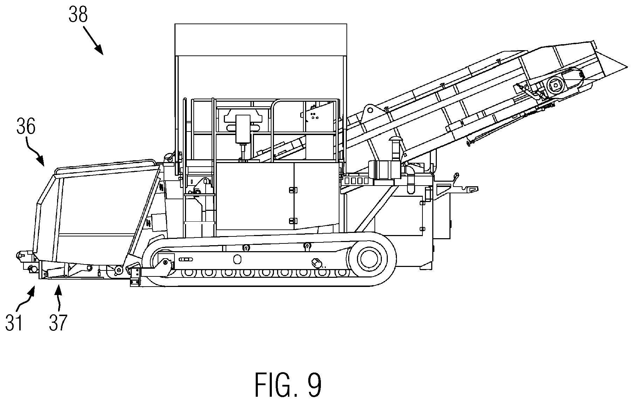

Figur 7 zeigt eine Andockbaugruppe 31, welche an einem Straßenfertiger 35 gemäß der Figur 8 bzw. an einem Beschicker 38 gemäß der Figur 9 befestigt werden kann. Die Andockbaugruppe 31 umfasst einen Abdruckbalken 32, an welchem Abdruckrollen 33 drehbar gelagert sind. Die Abdruckrollen 33 können während der Beschickung an einem vorausfahrenden Lastkraftwagen anstoßen, um diesen vor dem Beschicker 38 bzw. vor dem Straßenfertiger 35 herzuschieben. Die Andockbaugruppe 31 umfasst weiterhin einen am Chassis befestigbaren Querbalken 34, an dem zwei der erfindungsgemäßen Dämpfervorrichtungen 1 befestigt sind. Die jeweiligen Kolbenstangen 4 sind an den Abdruckbalken 32 befestigt. Entsprechend den auf den Abdruckbalken 32 wirkenden Kräften lassen sich die Dämpfervorrichtungen 1 unabhängig voneinander ein- bzw. ausfahren. Der Querbalken 34, welcher gemäß der Figur 7 als Bestandteil der Andockbaugruppe 31 vorliegt, könnte ebenso gut als Chassiskomponente des Straßenfertigers 35 oder Beschickers 38 ausgebildet sein, wobei sich die jeweiligen Dämpfervorrichtungen 1 lösbar daran befestigen lassen.

Figur 8 zeigt einen Straßenfertiger 35 mit einem Materialbunker 36 sowie einem Chassis 37. Die Andockbaugruppe 31 ist am Chassis 37 befestigt und ragt in Fahrtrichtung V gesehen vorne unterhalb des Materialbunkers 36 über eine vorbestimmte Länge hervor, um gegen die Hinterreifen eines vorausfahrenden Lastkraftwagens anzudocken, wenn dieser zur Materialbeschickung an den Straßenfertiger 35 heranfährt.

Figur 9 zeigt einen Beschicker 38. Der Beschicker 38 weist ebenfalls einen Materialbunker 36 wie der Straßenfertiger 35 auf. Am Chassis 37 des Beschickers 38 ist vorne unterhalb des Materialbunkers 36 die in der Figur 7 gezeigte Andockbaugruppe 31 befestigt, um gegen die Hinterreifen eines vorausfahrenden Lastkraftwagens anzudocken.

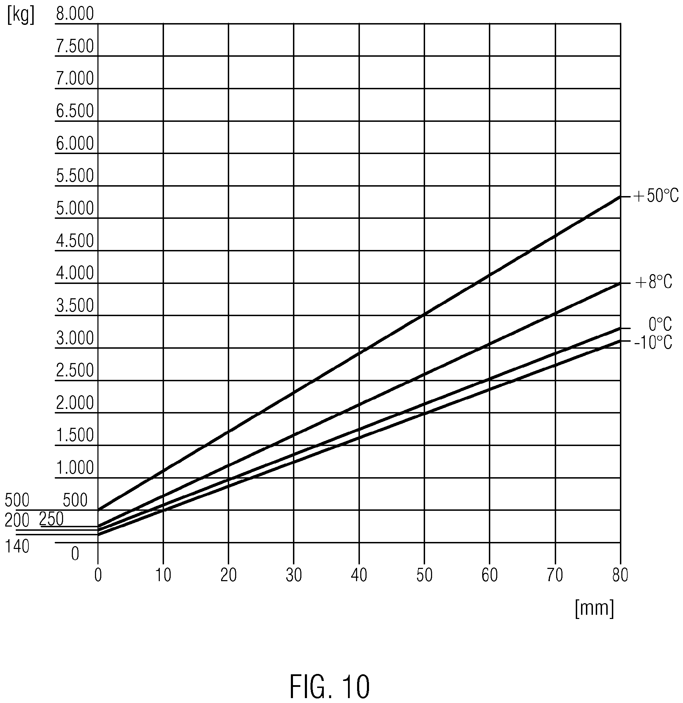

Figur 10 zeigt ein Kraft-Weg-Diagramm für die erfindungsgemäße Dämpfervorrichtung 1. Entlang der horizontalen Abszisse ist die Einschublänge der Kolbenstange 4 in den Zylinder 2 in [mm] aufgetragen. Auf der vertikalen Abszisse ist die Kraft in [daN/kg] aufgezeichnet. Zur Aufzeichnung der Kraftwegkennlinien umfasste das Federelement 18 elf Stück Tellerfedern (70 x 35,5 x 4), wobei einmal drei Federn und dreimal zwei Federn als jeweils gleichsinnige Federpakete sowie zweimal eine Feder wechselsinnig zueinander angeordnet wurden. Bei einer komplett gespannten Federsäule stellt sich eine maximale Federvorspannkraft von 9273 daN ein. Die erfindungsgemäße Dämpfervorrichtung 1 wurde bei Temperaturen von -10°C, 0°C, +8°C und +50°C getestet. Wie man gut in der Figur 10 erkennen kann, verhalten sich die jeweiligen Kraftwegkennlinien linear und steigen jeweils von einer Anfangskraft, bei welcher die Kolbenstange 4 vollständig aus dem Zylinder 2 ausgefahren ist, bis zu einer maximalen Blockkraft an, bei welcher die Kolbenstange 4 maximal in den Zylinder 2 eingeschoben ist. Beispielsweise begann die Kolbenstange 4 bei einer Temperatur von +8°C der Flüssigkeit 7 ab einer Anfangskraft von 250 daN in den Zylinder 2 der Dämpfervorrichtung 1 einzufahren, wobei die Kraftwegkennlinie linear bis zu einer maximalen Blockkraft von 4000 daN bei 80mm Einschublänge der Kolbenstange 4 ansteigt.

Die linearen Kraftwegkennlinien gemäß Figur 10 verhalten sich trotz der stark variierenden Temperaturen der eingeschlossenen Flüssigkeit 7 im Wesentlichen ähnlich, was durch die im Zylinder 2 schwimmende Schottwand 19 bewirkt wird. Somit ist es möglich, dass die erfindungsgemäße Dämpfervorrichtung 1 selbst beim Einsatz in unterschiedlichen Temperaturlagen eine nahezu konstante Dämpfcharakteristik beibehält, sodass dort insbesondere die Beschickung eines Straßenfertigers 35 bzw. eines Beschickers 38 gemäß den Figuren 8 und 9 verbessert durchführbar ist.

## Patentansprüche

1. Straßenfertiger (35) oder Beschicker (38) mit einem Materialbunker (36) und mindestens einer Dämpfervorrichtung (1), die am Chassis (37) des Straßenfertigers (35) oder Beschickers (38) befestigt ist und einen Abdruckbalken (32) trägt, gegen welchen ein Materiallieferfahrzeug zur Befüllung des Materialbunkers (36) andocken kann, wobei die Dämpfervorrichtung (1) einen Zylinder (2) umfasst, der auf einer Seite ein Kolbenlager (3) aufweist, welches eine Kolbenstange (4) verschiebbar aufnimmt, und auf einer anderen Seite eine Bodeneinheit (5) vorsieht,
**dadurch gekennzeichnet, dass**
der Zylinder (2), das Kolbenlager (3) und die Bodeneinheit (5) eine geschlossene Kammer (6) bilden, die mit einer kompressiblen Flüssigkeit (7) gefüllt ist, und wobei die Kolbenstange (4) die Kammer (6) in eine erste und zweite Kammerhälfte (9, 10) unterteilt, zwischen welchen die Flüssigkeit (7) verlagerbar ist, wenn sich die Kolbenstange (4) relativ zum Zylinder (2) verschiebt,
dass die geschlossene Kammer (6) ein veränderbares Volumen aufweist, um temperaturbedingte Druckschwankungen innerhalb der geschlossenen Kammer (6) zu kompensieren,
dass die Bodeneinheit (5) eine Schottwand (19) umfasst, die innerhalb des Zylinders (2) verschiebbar angeordnet ist, wobei
die Bodeneinheit (5) einen Deckel (17) und ein Federelement (18) aufweist, und wobei das Federelement (18) zwischen dem Deckel (17) und der Schottwand (19) angeordnet ist,
dass die Schottwand (19) einen Endabschnitt (24) und einen Führungsabschnitt (23) umfasst, wobei der Führungsabschnitt (23) über einen größeren Außendurchmesser als der Endabschnitt (24) verfügt, und wobei
die Schottwand (19) zwischen dem Endabschnitt (24) und dem Führungsabschnitt (23) einen Sitz (25) vorsieht, an welchen das Federelement (18) koppelbar ist.

2. Straßenfertiger (35) oder Beschicker (38) nach Anspruch 1, **dadurch gekennzeichnet, dass** das Federelement (18) mindestens eine Tellerfeder (22) aufweist.

3. Straßenfertiger (35) oder Beschicker (38) nach einem der Ansprüche 1 oder 2, **dadurch gekennzeichnet, dass** die Schottwand (19) relativ zum Zylinder (2) drehfest gelagert ist.

4. Straßenfertiger (35) oder Beschicker (38) nach einem der vorangehenden Ansprüche, **dadurch gekennzeichnet, dass** die Schottwand (19) als Hohlkörper (30) ausgebildet ist, der einen Teil des Kammervolumens der Dämpfervorrichtung (1) bildet.

5. Straßenfertiger (35) oder Beschicker (38) nach einem der vorangehenden Ansprüche, **dadurch gekennzeichnet, dass** die Kolbenstange (4) eine Kolbenplatte (8) umfasst, die innerhalb des Zylinders (2) zwischen dem Kolbenlager (3) und der Bodeneinheit (5) verschiebbar ist.

6. Straßenfertiger (35) oder Beschicker (38) nach Anspruch 5, **dadurch gekennzeichnet, dass** die Kolbenplatte (8) über mindestens eine Drosselbohrung (11) verfügt.

7. Straßenfertiger (35) oder Beschicker (38) nach Anspruch 6, **dadurch gekennzeichnet, dass** in mindestens einer der Drosselbohrungen (11) ein Ventilelement (14) angeordnet ist.

8. Straßenfertiger (35) oder Beschicker (38) nach einem der vorangehenden Ansprüche, **dadurch gekennzeichnet, dass** die kompressible Flüssigkeit (7) ein Silikon ist.

9. Straßenfertiger (35) oder Beschicker (38) nach einem der vorangehenden Ansprüche, **dadurch gekennzeichnet, dass** die Kolbenstange (4) durch die kompressible Flüssigkeit (7) gegen das Kolbenlager (3) vorgespannt ist.

10. Straßenfertiger (35) oder Beschicker (38) nach einem der vorangehenden Ansprüche, **dadurch gekennzeichnet, dass** der Zylinder (2) und/oder die Bodeneinheit (5) eine Lüftungsöffnung (29) umfasst, durch welche Luft aus der/in die Dämpfervorrichtung (1) strömbar ist, wenn sich das Kammervolumen ändert.

## Claims

1. A road finisher (35) or a charger (38) comprising a material hopper (36) and at least one damper device (1), which is fixed to the chassis (37) of the road finisher (35) or charger (38) and carries a push-bar (32) to which a material supply vehicle can be docked in order to fill up the material hopper (36), wherein the damper device (1) comprises a cylinder (2) which has a piston bearing (3) on one side, the piston bearing (3) displaceably receiving a piston rod (4), and provides for a bottom unit (5) on another side, **characterized in that** the cylinder (2), the piston bearing (3) and the bottom unit (5) form a closed chamber (6) which is filled with a compressible liquid (7), and wherein the piston rod (4) subdivides the chamber (6) into a first and a second chamber half (9, 10) between which the liquid (7) can be displaced if the piston rod (4) is displaced relative to the cylinder (2),
that the closed chamber (6) has a variable volume so as to compensate temperature-induced pressure fluctuations inside the closed chamber (6),
that the bottom unit (5) comprises a bulkhead (19) which is displaceably arranged inside the cylinder (2), wherein
the bottom unit (5) comprises a lid (17) and a spring element (18), the spring element (18) being arranged between the lid (17) and the bulkhead (19),
the bulkhead (19) comprises an end section (24) and a guiding section (23), the guiding section (23) having a greater outer diameter than the end section (24), and wherein
the bulkhead (19) provides a seat (25) between the end section (24) and the guiding section (23) to which the spring element (18) can be coupled.

2. Road finisher (35) or charger (38) of claim 1, **characterized in that** the spring element (18) comprises at least one disc spring (22).

3. Road finisher (35) or charger (38) of claim 1 or 2, **characterized in that** the bulkhead (19) is mounted relative to the cylinder (2) in a non-rotating manner.

4. Road finisher (35) or charger (38) of the previous claims, **characterized in that** the bulkhead (19) is formed as a hollow body (30) defining a part of the chamber volume of the damper device (1).

5. Road finisher (35) or charger (38) of one of the preceding claims, **characterized in that** the piston rod (4) comprises a piston plate (8) which is displaceable inside the cylinder (2) between the piston bearing (3) and the bottom unit (5).

6. Road finisher (35) or charger (38) of claim 5, **characterized in that** the piston plate (8) includes at least one throttling port (11).

7. Road finisher (35) or charger (38) of claim 6, **characterized in that** a valve member (14) is arranged in at least one of the throttling ports (11).

8. Road finisher (35) or charger (38) of one of the preceding claims, **characterized in that** the compressible liquid (7) is a silicone.

9. Road finisher (35) or charger (38) of one of the preceding claims, **characterized in that** the piston rod (4) is pretensioned relative to the piston bearing (3) by the compressible liquid (7).

10. Road finisher (35) or charger (38) of one of the preceding claims, **characterized in that** the cylinder (2) and/or the bottom unit (5) comprises a vent hole (29) through which air can flow out of/into the damper device (1) if the chamber volume changes.

## Revendications

1. Finisseur de route (35) ou alimentateur (38) comprenant une trémie à matériau (36) et au moins un dispositif d'amortissement (1), qui est fixé au châssis (37) du finisseur de route (35) ou de l'alimentateur (38) et porte une poutrelle de poussée (32) contre laquelle peut venir accoster un véhicule de livraison de matériau pour remplir la trémie à matériau (36), le dispositif d'amortissement (1) comprenant un cylindre (2) qui, sur un côté, présente un palier de piston (3) recevant de manière coulissante une tige de piston (4), et qui, de l'autre côté, prévoit une unité de fond (5),
**caractérisé**
**en ce que** le cylindre (2), le palier de piston (3) et l'unité de fond (5) forment une chambre (6) fermée, qui est remplie d'un liquide compressible (7), la tige de piston (4) subdivisant la chambre (6) en une première et une deuxième moitié de chambre (9, 10) entre lesquelles peut être déplacé le liquide (7) lorsque la tige de piston (4) coulisse par rapport au cylindre (2),
**en ce que** la chambre (6) fermée présente un volume variable en vue de compenser des variations de pression dues à la température, à l'intérieur de la chambre (6) fermée,
**en ce que** l'unité de fond (5) comprend une cloison étanche (19), qui est agencée de manière coulissante à l'intérieur du cylindre (2), l'unité de fond (5) comportant un couvercle (17) et un élément de ressort (18), et l'élément de ressort (18) étant agencé entre le couvercle (17) et la cloison étanche (19),
**en ce que** la cloison étanche (19) comprend un tronçon d'extrémité (24) et un tronçon de guidage (23), le tronçon de guidage (23) disposant d'un diamètre extérieur plus grand que celui du tronçon d'extrémité (24), et la cloison étanche (19) prévoyant, entre le tronçon d'extrémité (24) et le tronçon de guidage (23), un siège (25) auquel peut être couplé l'élément de ressort (18).

2. Finisseur de route (35) ou alimentateur (38) selon la revendication 1, **caractérisé en ce que** l'élément de ressort (18) comprend au moins une rondelle-ressort (22).

3. Finisseur de route (35) ou alimentateur (38) selon l'une des revendications 1 ou 2, **caractérisé en ce que** la cloison étanche (19) est montée fixe en rotation par rapport au cylindre (2).

4. Finisseur de route (35) ou alimentateur (38) selon l'une des revendications précédentes, **caractérisé en ce que** la cloison étanche (19) est réalisée en tant que corps creux (30), qui forme une partie du volume de chambre du dispositif d'amortissement (1).

5. Finisseur de route (35) ou alimentateur (38) selon l'une des revendications précédentes, **caractérisé en ce que** la tige de piston (4) comporte une plaque de piston (8), qui peut coulisser à l'intérieur du cylindre (2), entre le palier de piston (3) et l'unité de fond (5).

6. Finisseur de route (35) ou alimentateur (38) selon la revendication 5, **caractérisé en ce que** la plaque de piston (8) dispose d'au moins un alésage d'étranglement (11) .

7. Finisseur de route (35) ou alimentateur (38) selon la revendication 6, **caractérisé en ce que** dans l'un au moins des alésages d'étranglement (11) est agencé un élément de soupape (14).

8. Finisseur de route (35) ou alimentateur (38) selon l'une des revendications précédentes, **caractérisé en ce que** le liquide compressible (7) est un silicone.

9. Finisseur de route (35) ou alimentateur (38) selon l'une des revendications précédentes, **caractérisé en ce que** la tige de piston (4) est précontrainte contre le palier de piston (3), par le liquide compressible (7).

10. Finisseur de route (35) ou alimentateur (38) selon l'une des revendications précédentes, **caractérisé en ce que** le cylindre (2) et/ou l'unité de fond (5) comportent une ouverture de purge d'air (29), à travers laquelle de l'air peut s'écouler hors du/dans le dispositif d'amortissement (1), lorsque le volume de chambre varie.
